# EUROPÄISCHE PATENTSCHRIFT

(11) **EP 3 737 589 B1**
(45) Veröffentlichungstag und Bekanntmachung des Hinweises auf die Patenterteilung: **26.03.2025**
(21) Anmeldenummer: 18803597.6
(22) Anmeldetag: 08.11.2018
(51) Int. Cl.: B60R 16/023, G05B 19/042, B60W 50/023, B60T 8/88, B60R 16/03

(54) **VERFAHREN ZUM HERSTELLEN EINES STEUERSYSTEMS FÜR EIN KRAFTFAHRZEUG, STEUERSYSTEM**
METHOD FOR PRODUCING A CONTROL SYSTEM FOR A MOTOR VEHICLE, AND CONTROL SYSTEM
PROCÉDÉ DE FABRICATION D'UN SYSTÈME DE COMMANDE POUR UN VÉHICULE AUTOMOBILE, SYSTÈME DE COMMANDE

(30) Priorität: 11.01.2018 DE 102018200313
(43) Veröffentlichungstag der Anmeldung: 18.11.2020
(73) Patentinhaber: Robert Bosch GmbH, 70442 Stuttgart (DE)
(72) Erfinder: BRAEUCHLE, Goetz, 74934 Reichartshausen (DE); MAUCHER, Thorsten, 69126 Heidelberg (DE)
(86) Internationale Anmeldenummer: PCT/EP2018/080634
(87) Internationale Veröffentlichungsnummer: WO 2019/137653

(56) Entgegenhaltungen:
- WO-A1-2015/173134
- WO-A1-2017/178211
- DE-A1- 10 245 196
- DE-A1- 102009 046 234
- DE-A1- 102014 015 445
- DE-A1- 19 736 231
- DE-C2- 19 736 231

## Beschreibung

Die Erfindung betrifft ein Verfahren zum Herstellen eines Steuersystems, insbesondere Fahrer-Assistenzsystems, eines Kraftfahrzeugs. Weiterhin betrifft die Erfindung ein Steuersystem für ein Kraftfahrzeug, das insbesondere gemäß dem oben genannten Verfahren hergestellt ist.

### Stand der Technik

Mit der zunehmenden Anzahl von elektrischen/elektronischen Steuersystemen in Kraftfahrzeugen nimmt die Anzahl der Steuergeräte sowie anderer elektrischer Komponenten ebenfalls zu. Insbesondere im Rahmen der Elektrifizierung der Antriebssysteme sowie dem Bereitstellen von Funktionen, die einen voll- oder teilautonomen Fahrbetrieb ermöglichen sollen, steigt auch der Anspruch an die Sicherheit, insbesondere Ausfallsicherheit, derartiger Systeme. Insbesondere sind redundante Lösungen gefordert, die sicherstellen, dass auch bei Ausfall eines Steuergeräts, ein Weiterbetrieb des Kraftfahrzeugs gefahrlos möglich ist. Während bisher im Wesentlichen eigenständige Steuergeräte verbaut werden, welche alleine eine vollständige Assistenzfunktion bereitstellen, nimmt mittlerweile die Anzahl von Lösungen zu, bei welchen eine Assistenzfunktion durch mehrere Steuergeräte zusammen erfüllt wird. Dies verkompliziert den Aufbau des einzelnen Steuergeräts, insbesondere bei der fahrzeugindividuellen Anpassung, bietet jedoch den Vorteil einer einfach zu erreichenden Redundanz.

Für einen vollständig redundanten Betrieb sind zwei Steuergeräte erforderlich, die dieselbe Codierung aufweisen. Unter der Codierung wird im Zusammenhang mit der vorliegenden Erfindung die Parametrisierung des Steuergeräts mit fahrzeugindividuellen Betriebsparametern verstanden. Diese fahrzeugindividuellen Betriebsparameter müssen in beiden Steuergeräten vorhanden, die beiden Steuergeräte also mit der gleichen Codierung versehen sein, um einen redundanten Betrieb zu ermöglichen. Wenn bei der Fertigung jedoch jedes Steuergerät einzeln codiert wird, bedeutet dies einen hohen Aufwand auch bei der Prüfung der Steuergeräte noch vor deren Montage im Kraftfahrzeug.

Die Offenlegungsschrift DE 102 45 196 A1 offenbart ein Verfahren zum Codieren von Steuergeräten eines Kraftfahrzeugs. Dabei werden bei Wiederinbetriebnahme des Kraftfahrzeugs Steuergerät-Daten aus einer nicht-flüchtigen Datenspeichereinrichtung des Kraftfahrzeugs in flüchtige Datenspeicher, beispielsweise RAM-Speicher, der Steuergeräte übertragen.

### Offenbarung der Erfindung

Das erfindungsgemäße Verfahren mit den Merkmalen des Anspruchs 1 hat den Vorteil, dass die Codierung des zweiten Steuergeräts einfach und insbesondere ohne weiteres Zutun eines Monteurs erfolgt, so dass die Fertigungsschritte vereinfacht und ein fahrzeugindividuelles Anpassen eines zweiten Steuergeräts erst im Fahrzeug selbst erfolgt. Hierdurch wird der Herstellungsaufwand erheblich vereinfacht und Herstellungskosten werden reduziert. Erfindungsgemäß wird dies folgendermaßen erreicht: Zunächst wird ein erstes Steuergerät bereitgestellt, das durch das Einstellen fahrzeugindividueller Betriebsparameter für das Zielkraftfahrzeug codiert wird. Für die Codierung werden also an das Ziel-Kraftfahrzeug, also das Kraftfahrzeug, welches das Steuersystem verwenden wird, angepasste fahrzeugindividuelle Betriebsparameter eingestellt beziehungsweise in dem ersten Steuergerät gespeichert, welche einen Betrieb des Steuergeräts in dem Kraftfahrzeug mit der gewünschten Funktion erlauben. Anschließend wird ein zweites Steuergerät bereitgestellt und mit dem ersten Steuergerät signaltechnisch verbunden, so dass eine Datenübertragung zwischen den beiden Steuergeräten stattfinden kann. Anschließend wird die Codierung des ersten Steuergeräts durch diese signaltechnische Verbindung auf das zweite Steuergerät übertragen. Damit werden sämtliche dem ersten Steuergerät bekannten fahrzeugindividuellen Parameter auch an das zweite Steuergerät übermittelt und dort zu dessen Codierung gespeichert. Hierdurch ergibt sich eine einfache Codierung des zweiten Steuergeräts, das dann als redundantes Steuergerät in dem Steuersystem beziehungsweise dem Fahrer-Assistenzsystem zur Verfügung steht. Dies bietet dem Hersteller die Möglichkeit, Einheitssteuergeräte beziehungsweise uncodierte oder Blanko-Steuergeräte zur Verfügung zu stellen, die erst beim Einsatz in das jeweilige Steuersystem durch das dort bereits befindliche erste Steuergerät codiert und damit an das Kraftfahrzeug und an die zu erfüllende Funktion angepasst werden. Durch einen einfachen Vergleich der Codierungen der beiden Steuergeräte miteinander ist außerdem ein Codierfehler leicht zu erkennen. Insbesondere werden hierzu Prüfsummen gebildet und miteinander verglichen, was eine besonders einfache Fehlererkennung ermöglicht.

Insbesondere erfolgt die Übertragung der Codierung durch das erste Steuergerät. Das erste Steuergerät ist insbesondere dazu ausgebildet, die signaltechnische Verbindung zu dem zweiten Steuergerät zu erkennen und bei erkannter Verbindung seine Codierung an das zweite Steuergerät zu übertragen. Alternativ ist das zweite Steuergerät dazu ausgebildet, bei dem ersten Steuergerät nach erfolgter Erkennung der signaltechnischen Verbindung nach der Codierung zu fragen, die dann als Antwort übertragen wird.

Weiterhin ist bevorzugt vorgesehen, dass die Übertragung der Codierung als Hintergrundvorgang oder Sekundärvorgang durchgeführt wird, so dass die Primärfunktionen zumindest des ersten Steuergeräts auch während der Übertragung der Codierung aufrechterhalten bleiben und durchgeführt werden können. So ist eine Übertragung der Codierung auch bereits im laufenden Betrieb des ersten Steuergeräts ermöglicht.

Weiterhin ist bevorzugt vorgesehen, dass die Codierung durch Speichern der fahrzeugindividuellen Betriebsparameter in einem nicht-flüchtigen Speicher des jeweiligen Steuergeräts erfolgt, wie bereits angedeutet.

Gemäß einer bevorzugten Weiterbildung der Erfindung ist vorgesehen, dass als signaltechnische Verbindung eine BUS-Verbindung eingesetzt wird. Derartige Verbindungen sind in Kraftfahrzeugen mittlerweile Standard, so dass auf bereits vorliegende Verbindungstechniken zurückgegriffen werden kann. Hierdurch ergibt sich eine einfache Integration insbesondere des zweiten Steuergeräts in das Steuersystem.

Gemäß einer bevorzugten Weiterbildung ist außerdem vorgesehen, dass die Übertragung der Codierung durch ein Multiplexverfahren erfolgt. Hierdurch wird die Bandbreite, die für die Übertragung der Codierung genutzt wird, reduziert wird, um die BUS-Last vernachlässigbar zu halten. Insbesondere hierdurch ist ein Hintergrundbetrieb beziehungsweise ein Hintergrundprozess zur Übertragung der Codierung an das zweite Steuergerät mit einfachen Mitteln gewährleistet.

Vorzugsweise erfolgt die Übertragung der Codierung verschlüsselt und/oder signiert. Hierdurch ist sichergestellt, dass die Codierung beispielsweise nicht auf ein unbefugtes oder unberechtigtes Steuergerät übertragen wird.

Das erfindungsgemäße Steuersystem mit den Merkmalen des Anspruchs 8 zeichnet sich dadurch aus, dass das zweite Steuergerät dazu ausgebildet ist, die Codierung des ersten Steuergeräts zu übernehmen, und insbesondere dass das Steuersystem dazu ausgebildet ist, das erfindungsgemäße Verfahren durchzuführen, um das zweite Steuergerät zu codieren. Es ergeben sich die hierdurch die bereits genannten Vorteilen.

Im Folgenden soll die Erfindung anhand der Zeichnung näher erläutert werden. Dazu zeigen:
- Figur 1: ein vorteilhaftes Steuersystem in einer vereinfachten Darstellung und
- Figur 2: ein Flussdiagramm zur Erläuterung eines Verfahrens zum Betreiben oder Herstellen des Steuersystems.

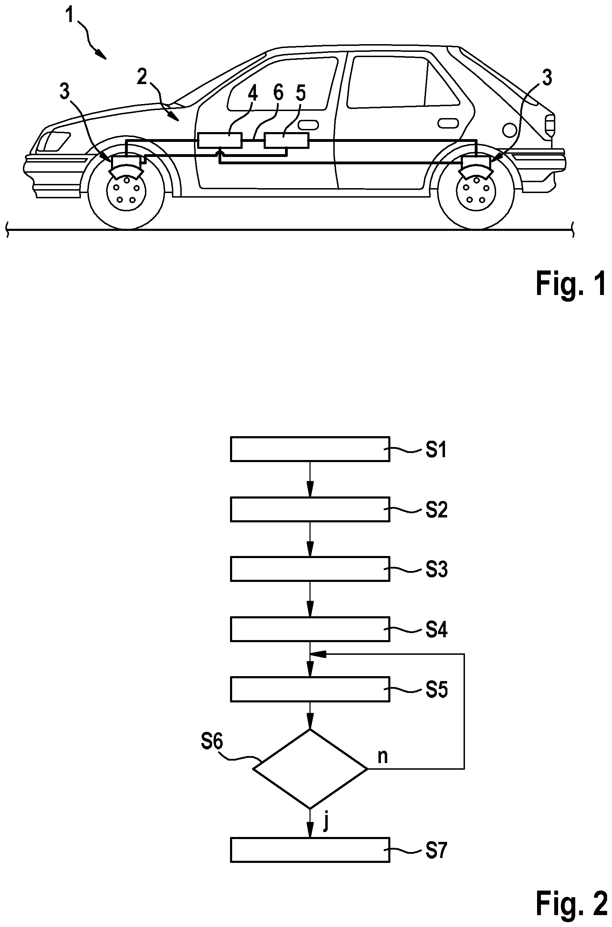

Figur 1 zeigt in einer vereinfachten Darstellung ein Kraftfahrzeug 1 mit einem elektrischen/elektronischen Steuersystem 2, das ein Fahrer-Assistenzsystem des Kraftfahrzeugs 1 ist. Bei dem vorliegenden Steuersystem 2 handelt es sich um ein Bremssystem, das mehrere Radbremsen 3 aufweist, die jeweils einem Rad des Kraftfahrzeugs zugeordnet sind. Die Radbremsen sind durch ein erstes Steuergerät 4 ansteuerbar beziehungsweise betätigbar. Dazu sind insbesondere ein oder mehrere elektrisch ansteuerbare/betätigbare Ventile der jeweiligen Radbremse 3 mit dem Steuergerät signaltechnisch verbunden. Durch Betätigen der Ventile werden die Radbremsen 3 insbesondere mit einem Hydraulikdruck beaufschlagt, um das Kraftfahrzeug 1 bei Bedarf zu verzögern. Insbesondere handelt es sich dabei um ein autonom oder teil-autonom arbeitendes Steuersystem 2, welches unabhängig von Eingaben eines Fahrers des Kraftfahrzeugs 1 einen Bremsvorgang durchführt, beispielsweise in einem teil- oder vollautonomen Fahrbetrieb oder Einparkbetrieb oder dergleichen.

Weil unterschiedliche Kraftfahrzeugtypen es erfordern, dass die Radbremsen im autonomen oder teilautonomen Fahrbetrieb unterschiedlich betätigt werden, beispielsweise aufgrund unterschiedlicher Gewichtsklassen, Anzahl von Radbremsen und/oder erreichbaren Bremswerten, wird das Steuergerät vor Inbetriebnahme des Kraftfahrzeugs codiert, indem es mit fahrzeugindividuellen Betriebsparametern versorgt wird, durch welche ein fahrzeugindividueller Betrieb des Steuersystems 2 beziehungsweise des Assistenzsystems ermöglicht ist. Dazu werden die fahrzeugindividuellen Betriebsparameter in einem nicht-flüchtigen Speicher des Steuergeräts 4 hinterlegt, beispielsweise bei der Herstellung des Steuergeräts 4, das dann bevorzugt erst im Anschluss in dem Kraftfahrzeug 1 verbaut wird.

Aufgrund der erhöhten Anforderungen an eine Betriebssicherheit eines derartigen Steuersystems weist das Kraftfahrzeug 1 außerdem ein zweites Steuergerät 5 auf, das redundant zu dem Steuergerät 4 in dem Steuersystem 2 vorhanden und daher ebenfalls mit den Radbremsen 3 signaltechnisch verbunden ist.

Anhand des in Figur 2 gezeigten Flussdiagramms soll im Folgenden die Herstellung des Steuersystems 2 näher erläutert werden:
In einem ersten Schritt S1 wird das erste Steuergerät 4 bereitgestellt und wie zuvor beschrieben in einem darauffolgenden Schritt S2 codiert. Dazu werden fahrzeugindividuelle Betriebsparameter in einen nicht-flüchtigen Speicher des Steuergeräts 4 geschrieben. Das Steuergerät 4 verwendet diese Parameter, um die Radbremsen 3 optimal anzusteuern, beispielsweise zur Durchführung eines teil- oder vollautonomen Bremsvorgangs beispielsweise im Rahmen eines Parkmanövers oder dergleichen.

Anschließend wird das Steuergerät 4 in dem Kraftfahrzeug 1 verbaut und in das Steuersystem 2 integriert. Dazu wird das Steuergerät 4 insbesondere mit den Radbremsen 3 elektrisch oder signaltechnisch zu deren Ansteuerung verbunden.

Um die Redundanz des Steuersystems 2 zu gewährleisten, wird das zweite Steuergerät 5 in einem Schritt S4 bereitgestellt und mit dem ersten Steuergerät 4 verbunden. Hierzu wird beispielswiese eine BUS-Verbindung 6 des Kraftfahrzeugs 1 genutzt. Außerdem wird das Steuergerät 4 ebenfalls mit den Radbremsen 3 verbunden, um den redundanten Betrieb des Steuersystems 2 zu ermöglichen. Bei dem Steuergerät 5 handelt es sich um ein Blankobeziehungsweise uncodiertes Steuergerät 5, in dessen Speicher noch keine fahrzeugindividuellen Betriebsparameter hinterlegt sind.

Nachdem das Steuergerät 5 in das Steuersystem 2 integriert wurde, wird in einem Schritt S5 durch die Verbindung 6 die Codierung des Steuergeräts 4 auf das Steuergerät 5 übertragen, so dass sämtliche im Steuergerät 4 hinterlegten Betriebsparameter auch auf das Steuergerät 5 übertragen werden. Damit wird das Steuergerät 5 mithilfe des Steuergerätes 4 codiert. Ein separater oder vorgelagerter Codierungsschritt entfällt. Dadurch muss auch im zweiten Steuergerät 5 kein spezifisches Codierprotokoll implementiert und getestet werden. Insbesondere erfolgt die Übertragung der Codierung im Hintergrund und wird durch das erste Steuergerät 4, welches das Primärsystem darstellt, durchgeführt. Dabei wird die Herstellungszeit für das Steuersystem 2 insgesamt reduziert. Bevorzugt erfolgt die Übertragung der Codierung von dem Steuergerät 4 auf das Steuergerät 5 auf einem festgelegten Standard (-protokoll) mithilfe einer Verschlüsselung und/oder Signierung, so dass eine unbefugte Übernahme oder Entnahme der Codierung verhindert wird. Um die Bandbreite während der Codierung des Steuergeräts 5 gering zu halten, erfolgt die Übertragung der Codierung beziehungsweise der fahrzeugindividuellen Betriebsparameter bevorzugt durch ein Multiplexverfahren. Dadurch wird die Codierung insbesondere in einem Hintergrundbetrieb oder -prozess von dem Steuergerät 4 auf das Steuergerät 5 übertragen.

Durch das vorteilhafte Verfahren wird erreicht, dass eine separate Codierung des redundanten Steuergeräts 5 vorab vermieden wird. Dadurch wird die Möglichkeit geboten, Einheitssteuergeräte beziehungsweise uncodierte Steuergeräte herzustellen und zur Verfügung zu stellen, die dann erst beim Einbau oder der Integration in das Steuersystem 2 insbesondere automatisiert durch das bereits vorhandene und codierte Steuergerät codiert werden. Hierdurch ergibt sich auch der Vorteil, dass eines der Steuergeräte zu Wartungs- oder Reparaturzwecken einfach ausgetauscht werden kann. Das neu eingesetzte Einheits-Steuergerät wird dann durch das in dem Steuersystem 2 verbliebenen Steuergerät codiert. Dabei kann sowohl das erste Steuergerät 4 als auch das zweite Steuergerät 5 ausgetauscht werden, wobei dann das jeweils verbliebene Steuergerät zu dem primären Steuergerät wird, welches den Codiervorgang des neuen Steuergeräts durchführt.

Um sicherzustellen, dass die Codierung erfolgreich erfolgt ist, wird in einem weiteren Schritt S6 die Codierung des Steuergeräts 5 mit der ursprünglichen Codierung des Steuergeräts 4 verglichen. Dazu werden beispielsweise Prüfsummen gebildet, die miteinander verglichen werden. Weichen die Prüfsummen und/oder die Betriebsparameter voneinander ab (n), so wird der Codiervorgang im Schritt S5 wiederholt, bis die Codierungen übereinstimmen. Stimmen die Codierungen oder die Prüfsummen (j) überein, so wird das Verfahren in einem Schritt S7 abgeschlossen und das Steuersystem 2 fertiggestellt.

## Patentansprüche

1. Verfahren zum Herstellen eines Steuersystems (2), insbesondere Fahrer-Assistenzsystem, eines Kraftfahrzeugs (1), mit folgenden Schritten:
- Bereitstellen eines ersten Steuergeräts (4),
- Einstellen fahrzeugindividueller Betriebsparameter für das Kraftfahrzeug in dem ersten Steuergerät (4) zu seiner Codierung,
- Bereitstellen eines zweiten Steuergeräts (5) und signaltechnisches Verbinden des zweiten Steuergeräts (5) mit dem ersten Steuergerät (4),
- Übertragung der Codierung des ersten Steuergeräts (4) auf das zweite Steuergerät (5), das dann als redundantes Steuergerät (5) in dem Steuersystem (2) zur Verfügung steht.

2. Verfahren nach Anspruch 1, **dadurch gekennzeichnet, dass** die Übertragung der Codierung durch das erste Steuergerät (4) erfolgt.

3. Verfahren nach einem der vorhergehenden Ansprüche, **dadurch gekennzeichnet, dass** die Übertragung der Codierung als Hintergrundprozess durchgeführt wird.

4. Verfahren nach einem der vorhergehenden Ansprüche, **dadurch gekennzeichnet, dass** die Codierung durch Speichern der fahrzeugindividuellen Betriebsparameter in einem nicht-flüchtigen Speicher des jeweiligen Steuergeräts (4,5) erfolgt.

5. Verfahren nach einem der vorhergehenden Ansprüche, **dadurch gekennzeichnet, dass** als signaltechnische Verbindung eine BUS-Verbindung verwendet wird.

6. Verfahren nach einem der vorhergehenden Ansprüche, **dadurch gekennzeichnet, dass** die Übertragung der Codierung durch ein Multiplexverfahren erfolgt.

7. Verfahren nach einem der vorhergehenden Ansprüche, **dadurch gekennzeichnet, dass** die Übertragung der Codierung verschlüsselt und/oder signiert erfolgt.

8. Steuersystem (2) für ein Kraftfahrzeug (1), insbesondere Fahrer-Assistenzsystem, mit einem ersten Steuergerät (4), das durch fahrzeugindividuelle Betriebsparameter codiert ist, und mit zumindest einem zweiten Steuergerät (5), das dazu ausgebildet ist, die Codierung des ersten Steuergeräts (4) zu übernehmen, wobei das Steuersystem (2) dazu ausgebildet ist, das Verfahren nach einem der Ansprüche 1 bis 7 durchzuführen, um das zweite Steuergerät (5) zu codieren, das dann als redundantes Steuergerät (5) in dem Steuersystem (2) zur Verfügung steht.

## Claims

1. Method for producing a control system (2), in particular driver assistance system, of a motor vehicle (1), having the following steps:
- providing a first control device (4),
- setting vehicle-specific operating parameters for the motor vehicle in the first control device (4) in order to code it,
- providing a second control device (5) and connecting the second control device (5) to the first control device (4) using signalling,
- transmitting the coding of the first control device (4) to the second control device (5), which is then available as a redundant control device (5) in the control system (2).

2. Method according to Claim 1, **characterized in that** the coding is transmitted by the first control device (4).

3. Method according to one of the preceding claims, **characterized in that** the coding is transmitted as a background process.

4. Method according to one of the preceding claims, **characterized in that** the coding is carried out by storing the vehicle-specific operating parameters in a non-volatile memory of the respective control device (4, 5).

5. Method according to one of the preceding claims, **characterized in that** a BUS connection is used as the signalling connection.

6. Method according to one of the preceding claims, **characterized in that** the coding is transmitted by means of a multiplexing method.

7. Method according to one of the preceding claims, **characterized in that** the coding is transmitted in encrypted and/or signed form.

8. Control system (2) for a motor vehicle (1), in particular driver assistance system, having a first control device (4), which is coded by means of vehicle-specific operating parameters, and having at least one second control device (5), which is designed to take over the coding of the first control device (4), wherein the control system (2) is designed to carry out the method according to one of Claims 1 to 7 to code the second control device (5) which is then available as a redundant control device (5) in the control system (2).

## Revendications

1. Procédé de fabrication d'un système de commande (2), en particulier d'un système d'assistance au conducteur, d'un véhicule automobile (1), comprenant les étapes suivantes :
- fourniture d'un premier appareil de commande (4),
- réglage de paramètres de fonctionnement propres au véhicule pour le véhicule automobile dans le premier appareil de commande (4) pour son codage,
- fourniture d'un deuxième appareil de commande (5) et liaison technique de signalisation du deuxième appareil de commande (5) avec le premier appareil de commande (4),
- transmission du codage du premier appareil de commande (4) au deuxième appareil de commande (5), qui est alors disponible en tant qu'appareil de commande redondant (5) dans le système de commande (2).

2. Procédé selon la revendication 1, **caractérisé en ce que** la transmission du codage est effectuée par le premier appareil de commande (4).

3. Procédé selon l'une des revendications précédentes, **caractérisé en ce que** la transmission du codage est effectuée en tant que processus d'arrière-plan.

4. Procédé selon l'une des revendications précédentes, **caractérisé en ce que** le codage s'effectue par enregistrement des paramètres de fonctionnement propres au véhicule dans une mémoire non volatile de l'appareil de commande respectif (4, 5).

5. Procédé selon l'une des revendications précédentes, **caractérisé en ce qu'**une liaison BUS est utilisée comme liaison technique de signalisation.

6. Procédé selon l'une des revendications précédentes, **caractérisé en ce que** la transmission du codage s'effectue par un procédé de multiplexage.

7. Procédé selon l'une des revendications précédentes, **caractérisé en ce que** la transmission du codage est cryptée et/ou signée.

8. Système de commande (2) pour un véhicule automobile (1), en particulier un système d'assistance au conducteur, comprenant un premier appareil de commande (4) qui est codé par des paramètres de fonctionnement propres au véhicule, et au moins un deuxième appareil de commande (5) qui est conçu pour prendre en charge le codage du premier appareil de commande (4), le système de commande (2) étant conçu pour mettre en œuvre le procédé selon l'une des revendications 1 à 7, afin de coder le deuxième appareil de commande (5), qui est alors disponible en tant qu'appareil de commande redondant (5) dans le système de commande (2).
